# EUROPEAN PATENT APPLICATION

(11) **EP 4 343 919 A1**
(43) Date of publication of application: **27.03.2024**
(21) Application number: 23197127.6
(22) Date of filing: 13.09.2023
(51) Int. Cl.: H01M 10/42, H01M 10/48, H01M 50/105

(54) **BATTERY PACK CAPABLE OF MEASURING SWELLING**

(30) Priority: 14.09.2022 KR 20220115641
(71) Applicant: Samsung SDI Co., Ltd., Yongin-si, Gyeonggi-do 17084 (KR)
(72) Inventor: Park, Sanghun, 17084 Yongin-si, Gyeonggi-do (KR)
(74) Representative: Gulde & Partner

(57) **Abstract**

A battery pack (10, 10F) including a case (120), an electrode assembly (110) having an electrode tab (114) within the case (120), and at least one swelling gauge (200, 200A, 200B, 200C, 200D, 200E, 200F) on the case (120), where the swelling gauge (200, 200A, 200B, 200C, 200D, 200E, 200F) is configured to measure the amount of deformation of the case (120) by deforming along with the case (120) when the electrode assembly (110) becomes deformed, and instantly and visually show the user the state or degree of swelling of the battery unit.

## Description

### BACKGROUND

### 1. Field

One or more embodiments relate to a battery pack.

### 2. Description of the Related Art

Battery packs may be partially different from one another according to the shapes and characteristics thereof, but generally they include electrode assemblies including cathodes, anodes, and separators, and cases accommodating the electrode assemblies. When battery packs are repeatedly charged and discharged during use, tabs of electrodes may be heated to a high temperature. When the temperature of the tabs gradually increases, swelling may occur in which the insides of the battery packs swell. Swelling may damage the appearance of the battery packs and change the internal structures thereof, and thus, greatly affect the stability of the battery packs.

### SUMMARY

Embodiments are directed to a battery pack, including a case, an electrode assembly having an electrode tab in the case, and at least one swelling gauge on the case, wherein the swelling gauge is configured to measure an amount of deformation of the case by deforming with the case when the electrode assembly becomes deformed.

The swelling gauge may include a plurality of swelling measurement portions that may be spaced apart from each other so that a distance therebetween may change according to the deformation of the case.

The plurality of swelling measurement portions may be concentric.

The plurality of swelling measurement portions may include a plurality of broken lines.

The at least one swelling gauge may include one or more scale portions on the plurality of swelling measurement portions.

The one or more scale portions may include a plurality of broken lines.

The one or more scale portions may include a horizontal scale portion, a vertical scale portion, or both a horizontal scale portion and a vertical scale portion, wherein the horizontal scale portion extends in a horizontal direction and the vertical scale portion extends in a vertical direction.

A grid portion may be on at least a portion of the swelling gauge.

The grid portion may be a square grid pattern.

The swelling gauge may include a temperature sensitive pigment.

The swelling gauge may become transparent when the temperature of the case is greater than a particular temperature (e.g., being defined by a temperature sensitive pigment), and the swelling gauge may become visible when the temperature of the case is equal to or less than the particular temperature.

The swelling gauge may become visible when the temperature of the case is greater than a particular temperature (e.g., being defined by a temperature sensitive pigment), and the swelling gauge may become transparent when the temperature of the case is equal to or less than the particular temperature.

The swelling gauge may include an ink or paint that may be visible if a light in an infrared, visible, or ultraviolet region is irradiated thereon.

The swelling gauge may be formed by one of pad printing, engraving, and embossing.

The swelling gauge may be a mixture of uneven portions.

The swelling gauge may be a first swelling gauge on a central portion of the case, the battery pack may further include one or more second swelling gauge on the case spaced apart from the first swelling gauge.

The one or more second swelling gauge may include an edge gauge adjacent to an edge of the case.

The one or more second swelling gauge may be between the edge of the case and a center of the case.

The one or more second swelling gauge may include a corner gauge at a corner of the case.

The one or more second swelling gauge may be between the corner of the case and the center of the case.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

Features will become apparent to those of skill in the art by describing in detail exemplary embodiments with reference to the attached drawings in which:
FIG. 1 is an exploded, perspective view showing a battery pack according to an embodiment;
FIG. 2 is a plan view showing a battery pack according to an embodiment;
FIGS. 3 and 4 are diagrams showing a swelling gauge according to an embodiment;
FIG. 5 is a schematic diagram showing example physical states before and after expansion of a battery pack, according to an embodiment;
FIGS. 6 to 10 are diagrams showing swelling gauges according to embodiments;
FIG. 11 is a schematic, plan view showing a battery pack according to an embodiment;
FIG. 12 is a diagram showing a corner swelling gauge according to an embodiment; and
FIG. 13 is a diagram showing an edge swelling gauge according to an embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

As used herein, the term "and/or" includes any and all combinations of one or more of the associated listed items.

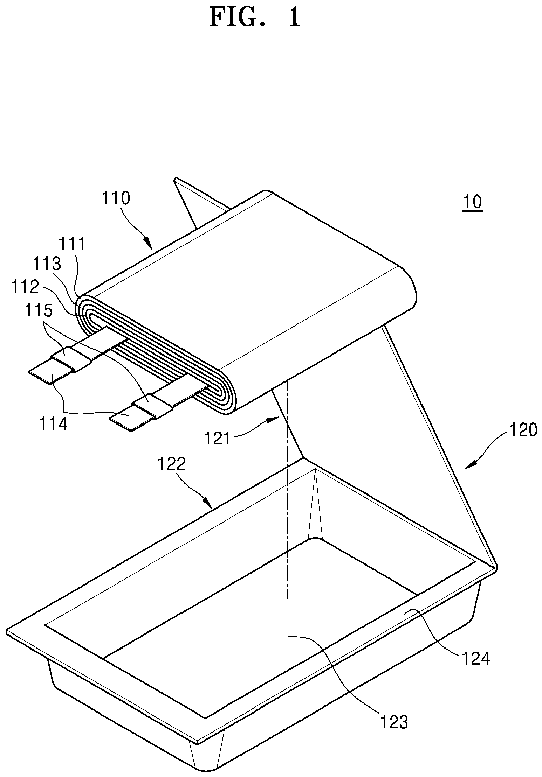

Referring to FIGS. 1-5, a battery pack 10 according to an embodiment may be a pouch-type secondary battery and may be used in a laptop. Alternatively, the battery pack 10 may be a can-type or cylindrical secondary battery and may be used in a tablet PC, a smartphone, a vehicle battery, and the like. Embodiments are not limited to the shape or type of secondary battery just mentioned, and other shapes and sizes are included and contemplated within the scope of the various embodiments.

The battery pack 10 may include an electrode assembly 110, a case 120, and a protection circuit module (not shown).

The electrode assembly 110 may be manufactured in the form of a jelly roll by winding a separator 113 between a first electrode plate 111 and a second electrode plate 112. Alternatively, the electrode assembly 110 may be manufactured in a stack form by stacking separators 113 between a plurality of first electrode plates 111 and a plurality of second electrode plates 112. Alternatively, the electrode assembly 110 may be manufactured by applying both a jelly roll and a stack.

The first electrode plate 111 may include a first active material coated portion formed by intermittently coating a first active material on a first substrate that is a sheet-shaped conductive material, and a first uncoated portion that is a portion at which the first substrate is exposed because the first active material is not coated. The first electrode plate 111 may be an anode plate, and the first active material may be an anode active material including but not limited to a carbon material such as crystalline carbon, amorphous carbon, a carbon composite, or a carbon fiber, lithium metal, or a lithium alloy.

The second electrode plate 112 may have a polarity different from the polarity of the first electrode plate 111, and may include a second active material coated portion formed by intermittently coating a second active material on a second substrate that is a sheet-shaped conductive material, and a second uncoated portion that is a portion at which the second substrate is exposed because it was not coated with the second active material. The second electrode plate 112 may be a cathode plate, and the second active material may include a cathode active material including but not limited to lithium such as LiCoO₂, LiNiO₂, LiMnO₂, LiMn₂O₄, or LiNi_{1-x-y}CoₓM_{y}O₂.

The separator 113 may be between the first electrode plate 111 and the second electrode plate 112. The separator 113 may insulate the first electrode plate 111 and the second electrode plate 112 from each other, and may exchange lithium ions between the first electrode plate 111 and the second electrode plate 112. The separator 113 may have a length sufficient to completely insulate the first electrode plate 111 and the second electrode plate 112 from each other even if the electrode assembly 110 contracts or expands while the battery pack 10 is charged and discharged.

Electrode tabs 114 may be on the first electrode plate 111 and the second electrode plate 112, respectively, and may protrude to one side. A pair of electrode tabs 114 may be provided to correspond to the first electrode plate 111 and the second electrode plate 112. In an embodiment, the electrode tabs 114 may be electrically connected to one side of the first uncoated portion of the first electrode plate 111 and extend toward the outside of the electrode assembly 110. In addition, the electrode tabs 114 may be electrically connected to one side of the second uncoated portion of the second electrode plate 112 and extend toward the outside of the electrode assembly 110.

Film portions 115 may be on the electrode tabs 114. The film portion 115 may be on one surface of the electrode tab 114 or may surround the electrode tab 114. The film portions 115 may seal the electrode tabs 114 exposed to the outside of the electrode assembly 110. The film portions 115 may be thermally fused with a sealing portion 124 of the case 120 described below to closely couple the electrode tabs 114 and the sealing portion 124 to prevent a short circuit from occurring due to contact of the electrode tabs 114 with a metal layer exposed at an end portion of the sealing portion 124.

The case 120 may form the appearance of the battery pack 10, and the electrode assembly 110 may be inside the case 120. The shape and size of the case 120 are not particularly limited and may have a shape and size corresponding to the electrode assembly 110 as an example. As shown in FIG. 1, the case 120 may have a hollow or empty rectangular parallelepiped shape, and other shapes such as a polyhedral, a cylinder, rectangular prism, cube and other shapes, all being hollow or empty, are contemplated within the scope of the embodiments.

The case 120 may include a cover 121, a lower case 122, an inner space 123, and the sealing portion 124.

The lower case 122 may include the inner space 123 having a dimension that is greater than a dimension of the electrode assembly 110, and the electrode assembly 110 may be inserted into the inner space 123. The cover 121 may be on an upper surface of the lower case 122 to be opened and closed to cover the electrode assembly 110 while the electrode assembly 110 is inserted into the inner space 123.

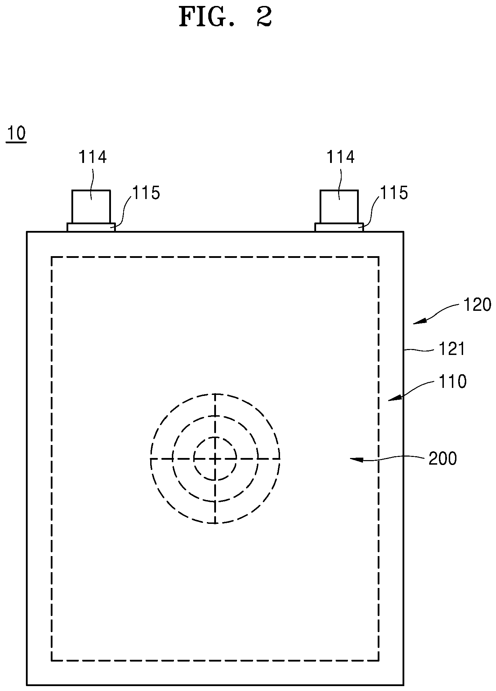

The sealing portion 124 may be along an upper edge of the lower case 122. As shown in FIG. 2, portions of the electrode tabs 114 are exposed to the outside of the case 120 while the electrode assembly 110 is inside the case 120. The film portion 115 on the electrode tabs 114 may be between the cover 121 and the lower case 122 at locations corresponding to the sealing portion 124.

The protection circuit module (not shown in the drawings) may include an electric circuit and various elements for preventing overcharge, overdischarge, overcurrent, and/or short circuit of the battery pack 10, e.g., the electrode assembly 110. The protection circuit module may be outside the case 120 and may be connected to the electrode tabs 114.

In an embodiment, the battery pack 10 may further include one or more swelling gauges 200. The swelling gauge 200 may be on one side of the battery pack 10 to measure an amount of deformation of the battery pack 10, e.g., the electrode assembly 110 or the case 120. As may be seen from the example shown in FIG. 2, the swelling gauge 200 may be on an outer surface of the case 120. The swelling gauge 200 may be on a central portion of an outer surface of the cover 121.

If the electrode assembly 110 inside the case 120 expands while the battery pack 10 operates, the case 120 or the cover 121 may also be caused to expand. Accordingly, a deformation may occur in the swelling gauge 200, and a user may visually check, either by human eye or digital camera, the deformation of the swelling gauge to measure or evaluate the swelling state of the battery pack 10.

In an embodiment, the swelling gauge 200 may be printed on the case 120. The swelling gauge 200 may be printed on one surface of the cover 121 in ink or otherwise imprinted to be visually checked by the user. In addition, if the cover 121 is deformed, the swelling gauge 200 printed on the cover 121 and a shape thereof are at least partially deformed, and thus, the user may measure by visual examination the degree of swelling based on the degree or level of deformation of the swelling gauge.

In an embodiment, the swelling gauge 200 may be printed on an outer surface of the case 120 via pad printing.

In an embodiment, the swelling gauge 200 may be printed using an ink or paint having a temperature sensitive pigment, e.g., a thermochromic pigment, to provide visual indication of temperature. Accordingly, if the temperature of the case 120 changes with a change in temperature of the electrode assembly 110, the shape of the swelling gauge 200 printed on the case 120 may also be deformed. If exceeding a particular temperature, the swelling gauge 200 may become transparent, and may regain color again at a temperature equal to or lower than the particular temperature. In another implementation, the swelling gauge 200 may have color if exceeding a particular temperature, and may become transparent at a temperature equal to or lower than the particular temperature. In this way, the user may instantly and conveniently check the temperature range of the battery pack 10 by way of visual inspection and observation.

In an embodiment, the swelling gauge 200 may be printed using an ink or paint the visibility of which is dependent on the wavelength of light irradiated thereon. The swelling gauge 200 may be printed using an ink or paint that is visible if light in an infrared, visible, or ultraviolet wavelength is irradiated thereon.

In an embodiment, the swelling gauge 200 may be formed on the case 120 by engraving or embossing. On an outer surface of the cover 121, the swelling gauge 200 may be formed concavely by engraving or may be formed convexly by embossing. In another implementation, the swelling gauge 200 may have a shape in which a plurality of uneven portions are mixed. An engraved portion, an embossed portion, or an uneven portion included in the swelling gauge 200 may be deformed by a deformation of the case 120.

In an embodiment, the swelling gauge 200 may be formed of a plurality of geometric figures. The swelling gauge 200 may include at least one of two-dimensional figures, e.g., a line such as a solid line, a dotted line, or an alternate long and short dash line and variations thereof, a triangle, a quadrangle, a circle, an ellipse and/or other 2-D figures.

In an embodiment, the swelling gauge 200 may be printed using ink or paint of a plurality of colors. The swelling gauge 200 may have different colors such as, e.g., black, white, red, blue, yellow, and green for respective regions.

In an embodiment, one or more swelling gauges 200 may be provided on an outer surface of the case 120 such as, for example, the outer surface of the cover 121. One or more of a plurality of swelling gauges 200 may be on a central portion, a corner portion, or an edge portion of the upper surface of the cover 121. In an implementation, the plurality of swelling gauges 200 may be on a side surface or a bottom surface of the lower case 122 of the case 120.

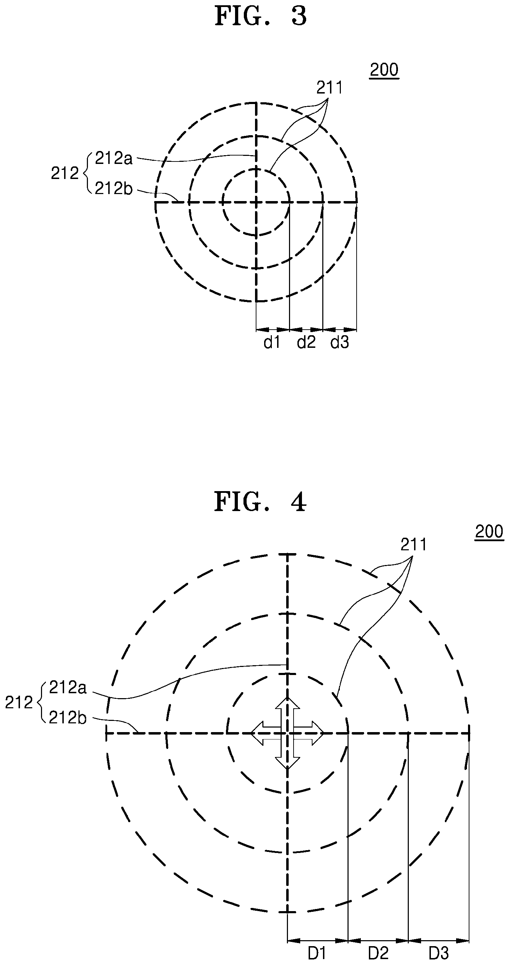

In an embodiment, the swelling gauge 200 may include a plurality of swelling measurement portions 211. The swelling measurement portions 211 may be spaced apart from one other so that distances among the swelling measurement portions 211 change according to a degree of expansion of the case 120. As shown in FIGS. 2 and 3, the swelling gauge 200 may be on the central portion of the upper surface of the cover 121, and may include a plurality of swelling measurement portions 211 that are concentric.

The plurality of swelling measurement portions 211 may include the central portion of the upper surface of the cover 121, and may be a plurality of concentric circles spaced apart from one other at predetermined distances. As shown in FIG. 3, the plurality of swelling measurement portions 211 may include three concentric circles. The innermost circle may have a radius d1 and may be concentric with the center of the cover 121. The second circle may be spaced apart from the innermost circle by d2, and the outermost circle may be spaced apart from the second circle by d3.

In an embodiment, the plurality of swelling measurement portions 211 may be formed of broken lines. As shown in FIG. 3, the plurality of swelling measurement portions 211 may be formed of dotted lines at equal distances and printed on the case 120.

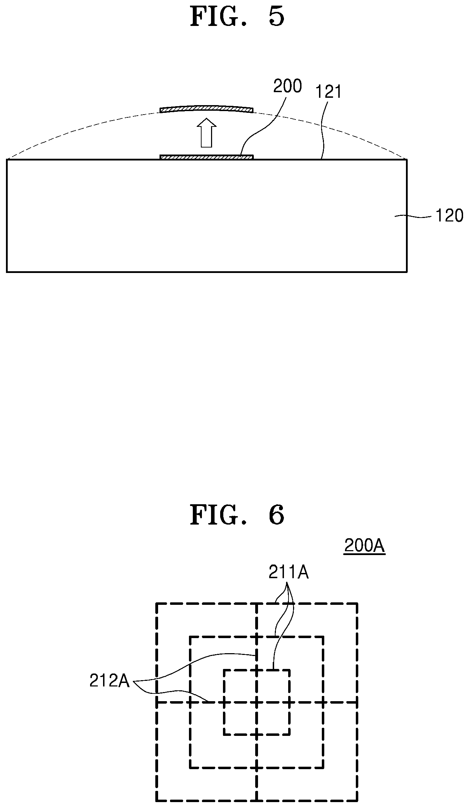

Through the structure as described above, the swelling gauge 200, according to an embodiment, may measure the degree of swelling of the battery pack 10. As shown in FIG. 5, the cover 121 may also be deformed if the case 120 is deformed, and accordingly, the swelling gauge 200 formed on the upper surface of the cover 121 may also be deformed. As shown by the solid line of FIG. 5, before being deformed, the cover 121 may remain flat and the swelling gauge 200 may remain in an original state without a deformation. In this state, the swelling gauge 200 may have a shape as shown in FIG. 3. If the electrode assembly 110 expands during the operation of the battery pack 10, the cover 121 may also expand, and may swell upwards as shown by the dotted line in FIG. 5. Accordingly, the swelling gauge 200 may also swell upwards like the deformed shape of the cover 121. In this state, the shape of the swelling gauge 200 may appear as having a shape as shown in FIG. 4.

As shown in FIG. 4, distances between and among the plurality of swelling measurement portions 211 of the deformed swelling gauge 200 may increase and widen. From among the plurality of swelling measurement portions 211, a radius of the innermost circle may increase to D1 and a distance thereof from the second circle may increase to D2. In addition, a distance between the outermost circle and a circle inward the same may increase to D3. Accordingly, the user may easily and instantly evaluate and measure the degree of swelling by visually checking the difference in distances between the plurality of swelling measurement portions 211.

FIGS. 3 and 4 show an implementation where the swelling measurement portions 211 are three concentric circles. In alternative configurations, the swelling measurement portions 211 may include two or four or more concentric circles.

In an embodiment, a distances among the swelling measurement portions 211 may be the same as or different from each other.

In an embodiment, the swelling gauge 200 may include one or more scale portions 212. As shown in FIG. 3, the scale portion 212 may extend across the plurality of swelling measurement portions 211. The scale portion 212 may extend across the concentric circles of the plurality of swelling measurement portions 211.

In an embodiment, the scale portion 212 may be formed of broken lines. As shown in FIG. 3, the scale portion 212 may be formed of dotted lines at equal distances and printed on the case 120.

In an embodiment, the scale portion 212 may include a vertical scale portion 212a and/or a horizontal scale portion 212b extending in a vertical direction and/or a horizontal direction, respectively. The vertical scale portion 212a may be on the concentric circles of the plurality of swelling measurement portions 211 and may extend parallel to a vertical line. The horizontal scale portion 212b may be on the concentric circles of the plurality of swelling measurement portions 211 perpendicular to the vertical scale portion 212a, and may extend parallel to a horizontal line.

The scale portion 212 may enable the user to more intuitively measure the degree of deformation of the swelling gauge 200. The user may measure the degree of swelling by comparing lengths of the scale portion 212 before and after the deformation of the swelling gauge 200. Alternatively, the user may measure the degree of swelling by comparing distances among between broken lines of the scale portion 212 or lengths of the broken lines.

Through the structure described above, the user of the battery pack 10 may easily and visually evaluate the degree of swelling of the battery pack 10 by using the swelling gauge 200 provided on the case 120.

FIGS. 6 to 10 show swelling gauges 200A, 200B, 200C, 200D, and 200E according to embodiments.

Referring to FIG. 6, the swelling gauge 200A may include a plurality of swelling measurement portions 211A having a shape that may be rectangular or square, that may also be concentric. The plurality of swelling measurement portions 211A may be at equal or different distances from one another. If the plurality of swelling measurement portions 211A are deformed with the deformation of the case 120, the user may measure the degree of swelling by measuring distances among the swelling measurement portions 211A, or may measure or evaluate the differences among horizontal lengths or vertical lengths of the swelling measurement portions 211A. Alternatively, the user may measure the degree of swelling by calculating or visually gauging an aspect ratio of the swelling measurement portions 211A.

In an embodiment, the swelling measurement portions 211A may be formed of broken lines. As shown in FIG. 6, the swelling measurement portions 211A may be formed of dotted lines at equal distances from one another and printed on the case 120.

In an embodiment, the swelling gauge 200A may include one or more scale portions 212A. The scale portion 212A may extend across the plurality of swelling measurement portions 211A. The scale portion 212A may be substantially the same as the scale portion 212 described above, and a detailed description thereof is omitted.

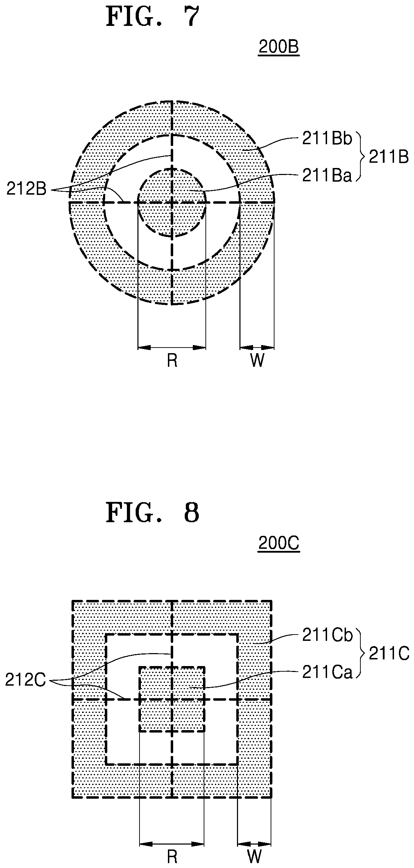

Referring to FIG. 7, the swelling gauge 200B may include a plurality of swelling measurement portions 211B having a predetermined area.

The swelling measurement portions 211B may include the circular swelling measurement portion 211Ba located at a central portion, and the band shape swelling measurement portion 211 Bb, which surrounds the circular swelling measurement portion 211Ba and may be spaced apart therefrom at a predetermined distance. The band shape swelling measurement portion 211Bb may have a circular ring shape. The circular swelling measurement portion 211Ba may have a diameter R, and swelling measurement portion 211Bb may have a width W. Accordingly, if the case 120 is deformed and the plurality of swelling measurement portions 211B are deformed, the diameter or width of the circular swelling measurement portion 211Ba or the swelling measurement portion 211Bb may be changed. Accordingly, the user may visually measure and evaluate the degree of swelling of the battery pack 10.

In an embodiment, the swelling measurement portions 211B may be formed of broken lines. As shown in FIG. 7, the swelling measurement portions 211B may be formed of dotted lines at equal distances and printed on the case 120.

In an embodiment, the swelling gauge 200B may include one or more scale portions 212B. The scale portion 212B may extend across the plurality of swelling measurement portions 211B. The scale portion 212B may be substantially the same as the scale portion 212 described above, and a detailed description thereof is omitted.

Referring to FIG. 8, the swelling gauge 200C may include a plurality of swelling measurement portions 211C having a predetermined area.

The swelling measurement portions 211C may include the rectangular shape swelling measurement portion 211Ca, which is located at a central portion, and the band shape swelling measurement portion 211Cb, which surrounds the rectangular shape swelling measurement portion 211Ca and be spaced apart therefrom at a predetermined distance. Here, the swelling measurement portion 211Cb may have a rectangular ring shape. The rectangular shape swelling measurement portion 211Ca may have a square shape in which a length of one side is R, and the swelling measurement portion 211Cb may have a width W. Accordingly, if the case 120 is deformed and the plurality of swelling measurement portions 211C are deformed, the side or width of the rectangular shape swelling measurement portion or the swelling measurement portion 211Cb may be changed. Accordingly, the user may visually measure and evaluate the degree of swelling of the battery pack 10.

In an embodiment, the swelling measurement portions 211C may be formed of broken lines. As shown in FIG. 8, the swelling measurement portions 211C may be formed of dotted lines at equal distances and printed on the case 120.

In an embodiment, the swelling gauge 200C may include one or more scale portions 212C. The scale portion 212C may extend across the plurality of swelling measurement portions 211C. The scale portion 212C may be substantially the same as the scale portion 212 described above, and a detailed description thereof is omitted.

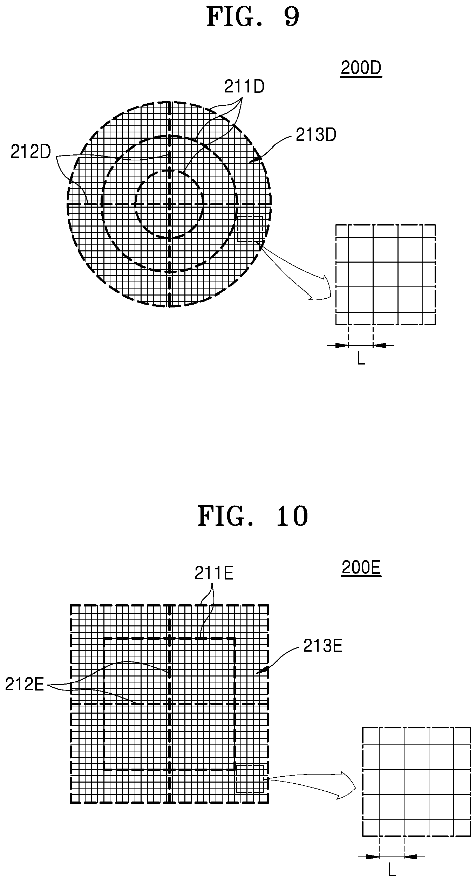

Referring to FIG. 9, the swelling gauge 200D may include a plurality of swelling measurement portions 211D having a circular shape which are concentric and a scale portion 212D. The swelling measurement portions 211D and the scale portion 212D may be the same as the swelling measurement portions 211 and the scale portion 212 shown in FIG. 3, and detailed description thereof will not be repeated.

In an embodiment, as shown in FIG. 9, the swelling gauge 200D may further include a grid portion 213D. The grid portion 213D may be on the entirety of the swelling gauge 200D or on select areas thereof, e.g., on alternating bands. The grid portion 213D may have, e.g., a square grid pattern. As shown in FIG. 9, the grid portion 213D may be formed by repeating the square pattern having one side with a length L. In addition, if the case 120 is deformed, the swelling measurement portions 211D and the grid portion 213D may be deformed. Accordingly, the user may easily and visually measure the degree of swelling of the battery pack 10 based on a level or degree of deformation.

Referring to FIG. 10, the swelling gauge 200E may include a plurality of swelling measurement portions 211E having a rectangular shape which are concentric, and a scale portion 212E. The swelling measurement portions 211E and the scale portion 212E may be the same as the swelling measurement portions 211 and the scale portion 212 shown in FIG. 3, and detailed description thereof will not be repeated.

In an embodiment, as shown in FIG. 10, the swelling gauge 200E may further include a grid portion 213E. The grid portion 213E may be on the entirety of the swelling gauge 200E or on select areas thereof, e.g., on alternating bands. The grid portion 213E may have, e.g., a square grid pattern. As shown in FIG. 9, the grid portion 213D may be formed by repeating the square pattern having one side with a length L. In addition, if the case 120 is deformed, the swelling measurement portions 211E and the grid portion 213E may be deformed. Accordingly, the user may easily and visually measure the degree of swelling of the battery pack 10 based on a level or degree of deformation.

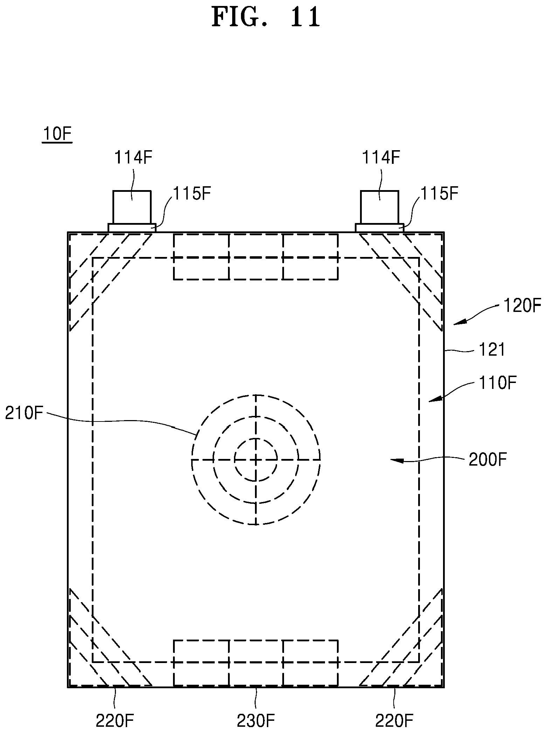

Referring to FIG. 11, the battery pack 10F is different from the battery pack 10 of FIG. 2 in that a swelling gauge 200F includes a first swelling gauge 210F and at least one second swelling gauge. The remaining components of the battery pack 10F are substantially the same as the corresponding components of the battery pack 10, and detailed description thereof will not be repeated.

As shown in FIG. 11, the first swelling gauge 210F may be on a central portion of an upper surface of a cover 121. The first swelling gauge 210F may be substantially the same as the swelling gauge 200 according to the embodiment described above, and detailed description thereof will not be repeated.

The at least one second swelling gauge may be on an outer surface of the cover 121 and spaced apart from the first swelling gauge 210F. In an embodiment, the at least one second swelling gauge may include a corner gauge 220F and/or an edge gauge 230F. As shown in FIG. 11, the corner gauges 220F may be respectively at four corner portions of the cover 121 (corner gauges may be at one or more of the corner portions), and/or one or more edge gauges 230F may be along sides of the cover 121. In addition, the corner gauge 220F and the edge gauge 230F may be placed away from the edges and corners of the cover towards the inside, or center, of the cover. The corner gauge 220F may be at the corner portion of the cover 121 to measure the degree of swelling of the corner portion that may not be easily and sensitively measured by the first swelling gauge 210F. In addition, the edge gauge 230F may be at an edge of the cover 121 to measure the degree of swelling of the edge that may not be easily and sensitively measured by the first swelling gauge 210F.

In an embodiment, the corner gauge 220F and the edge gauge 230F may be formed of broken lines. As shown in FIGS. 11 to 13, the corner gauge 220F and the edge gauge 230F may be formed of a plurality of broken lines at equal or different distances from one another.

In an embodiment, like the first swelling gauge 210F, the corner gauge 220F and the edge gauge 230F may be printed on the cover 121.

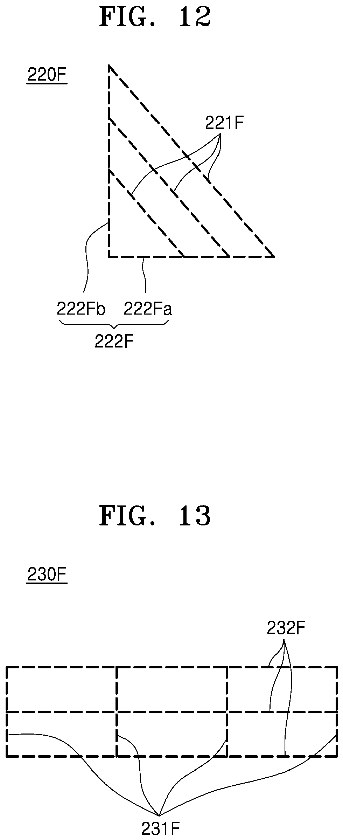

In an embodiment, the corner gauge 220F may include a plurality of swelling measurement portions 221F and a scale portion 222F. As shown in FIGS. 11 and 12, the corner gauge 220F may include a horizontal scale portion 222Fa and a vertical scale portion 222Fb in the scale portion 222F. In addition, the horizontal scale portion 222Fa may be adjacent to a horizontal line of the corner portion of the cover 121, and the vertical scale portion 222Fb may be adjacent to a vertical line of the corner portion of the cover 121. In addition, the plurality of swelling measurement portions 221F may be parallel to one another to connect the horizontal scale portion 222Fa and the vertical scale portion 222Fb to each other. Accordingly, the corner gauge 220F may have a rectangular triangular shape as a whole.

FIG. 11 shows one implementation having one corner gauge 220F at each of the four corner portions of the cover 121. The corner gauges 220F may be at one or more of the four corner portions.

In an embodiment, the edge gauge 230F may include a plurality of swelling measurement portions. As shown in FIGS. 11 and 13, the plurality of swelling measurement portions may include a plurality of first swelling measurements portions 231F extending vertically and a plurality of second swelling measurement portions 232F extending horizontally.

The plurality of first swelling measurement portions 231F and the plurality of second swelling measurement portions 232F may vertically cross each other to form a grid pattern. The first swelling measurement portions 231F may extend in a longitudinal direction of the cover 121, and the second swelling measurement portions 232F may extend in a width direction of the cover 121. Accordingly, if the edge of the cover 121 is deformed, the first swelling measurement portions 231F and the second swelling measurement portions 232F of the edge gauge 230F may be deformed, and thus, the user may easily and visually measure and evaluate the degree of swelling of the battery pack 10F. In addition, the user may measure and evaluate the degree of swelling of the battery pack 10F by comparing lengths or areas of the grid pattern formed by the plurality of first swelling measurement portions 231F and the plurality of second swelling measurement portions 232F.

According to an embodiment, a user may measure the degree of swelling of the battery pack in real time via a swelling gauge formed on a case or a cover.

According to an embodiment the battery pack may form a swelling gauge having a geometric shape on a case by printing, engraving, embossing, or the like, and thus, if the battery pack is deformed, the swelling gauge may also be deformed. Therefore, the user may easily and visually measure the degree of swelling of the battery pack.

By way of summation and review, in order to prevent the swelling of battery packs, the degree of swelling is predicted on the basis of an amount of increase in the thickness of the battery packs according to charging/discharging results evaluated in the development stage of the battery packs. On the basis of these predicted values, free space is left in spaces in which electrode assemblies of the battery packs are located. Thereafter, if the battery packs operate and exceed the predetermined number of charging and discharging cycles, battery management systems notify the cycle excess and replace the battery packs. However, according to the related arts described above, users may not check the states of battery packs currently in use in real time.

One or more embodiments include a battery pack of which degree of swelling may be visually measured by a user from the outside.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack (10, 10F), comprising:
a case (120);
an electrode assembly (110) having an electrode tab (114) in the case (120); and
at least one swelling gauge (200, 200A, 200B, 200C, 200D, 200E, 200F) on the case (120), wherein the swelling gauge (200, 200A, 200B, 200C, 200D, 200E, 200F) is configured to measure an amount of deformation of the case (120) by deforming with the case (120) when the electrode assembly (110) becomes deformed.

2. The battery pack (10, 10F) as claimed in claim 1, wherein the swelling gauge (200, 200A, 200B, 200C, 200D, 200E, 200F) includes a plurality of swelling measurement portions (211, 211A, 211B, 211Bb, 211C, 211Cb, 211D, 211E, 221F) spaced apart from each other so that a distance therebetween changes according to the deformation of the case (120).

3. The battery pack (10, 10F) as claimed in claim 2, wherein the plurality of swelling measurement portions (211, 211A, 211B, 211Bb, 211C, 211Cb, 211D, 211E, 221F) are concentric and/or includes a plurality of broken lines.

4. The battery pack (10, 10F) as claimed in claim 2 or 3, wherein the at least one swelling gauge (200, 200A, 200B, 200C, 200D, 200E, 200F) further includes one or more scale portions (212, 212A, 212B, 212C, 212D, 212E, 222F) on the plurality of swelling measurement portions (211, 211A, 211B, 211Bb, 211C, 211Cb, 211D, 211E, 221F).

5. The battery pack (10, 10F) as claimed in claim 4, wherein each of the one or more scale portions (212, 212A, 212B, 212C, 212D, 212E, 222F) includes a plurality of broken lines.

6. The battery pack (10, 10F) as claimed in claim 4 or 5, wherein one or more scale portions (212, 212A, 212B, 212C, 212D, 212E, 222F) includes a horizontal scale portion (212b, 222Fa), a vertical scale portion (212a, 222Fb), or both a horizontal scale portion (212b, 222Fa) and a vertical scale portion (212a, 222Fb), wherein the horizontal scale portion (212b, 222Fa) extends in a horizontal direction and the vertical scale portion (212a, 222Fb) extends in a vertical direction.

7. The battery pack (10, 10F) as claimed in any one of the preceding claims, further including a grid portion (213D, 213E) on at least a portion of the swelling gauge (200, 200A, 200B, 200C, 200D, 200E, 200F).

8. The battery pack (10, 10F) as claimed in claim 7, wherein the grid portion (213D, 213E) is a square grid pattern.

9. The battery pack (10, 10F) as claimed in any one of the preceding claims, wherein the swelling gauge (200, 200A, 200B, 200C, 200D, 200E, 200F) includes a temperature sensitive pigment.

10. The battery pack (10, 10F) as claimed in claim 9,
wherein the swelling gauge (200, 200A, 200B, 200C, 200D, 200E, 200F) becomes transparent when the temperature of the case (120) is greater than a particular temperature, and the swelling gauge (200, 200A, 200B, 200C, 200D, 200E, 200F) becomes visible when the temperature of the case (120) is equal to or less than the particular temperature; and/or
wherein the swelling gauge (200, 200A, 200B, 200C, 200D, 200E, 200F) becomes visible when the temperature of the case (120) is greater than a particular temperature, and the swelling gauge (200, 200A, 200B, 200C, 200D, 200E, 200F) becomes transparent when the temperature of the case (120) is equal to or less than the particular temperature.

11. The battery pack (10, 10F) as claimed in any one of the preceding claims, wherein the swelling gauge (200, 200A, 200B, 200C, 200D, 200E, 200F) includes an ink or paint that is visible if a light in an infrared, visible, or ultraviolet region is irradiated thereon.

12. The battery pack (10, 10F) as claimed in any one of the preceding claims, wherein the swelling gauge (200, 200A, 200B, 200C, 200D, 200E, 200F) is formed by one of pad printing, engraving, and embossing.

13. The battery pack (10, 10F) as claimed in any one of the preceding claims, wherein the swelling gauge (200, 200A, 200B, 200C, 200D, 200E, 200F) is a mixture of uneven portions (231F).

14. The battery pack (10, 10F) as claimed in any one of the preceding claims, wherein the swelling gauge (200, 200A, 200B, 200C, 200D, 200E, 200F) is a first swelling gauge (210F) on a central portion (231F) of the case (120), the battery pack (10, 10F) further including one or more second swelling gauge on the case (120) spaced apart from the first swelling gauge (210F).

15. The battery pack (10, 10F) as claimed in claim 14,
wherein the one or more second swelling gauge includes an edge gauge (230F) adjacent to an edge of the case (120); and/or.
wherein the one or more second swelling gauge includes a corner gauge (220F) at a corner of the case (120).
